# EUROPÄISCHE PATENTANMELDUNG

(11) **EP 1 213 901 A2**
(43) Veröffentlichungstag der Anmeldung: **12.06.2002**
(21) Anmeldenummer: 01128847.9
(22) Anmeldetag: 04.12.2001
(51) Int. Cl.: H04M 3/22

(54) **Vermittlungseinrichtung für ein Telekommunikationssystem sowie Verfahren zum Betrieb einer solchen**

(30) Priorität: 08.12.2000 DE 10061277
(71) Anmelder: Tenovis GmbH & Co. KG, 60326 Frankfurt am Main (DE)
(72) Erfinder: Müller, Wolf, 63322 Rödermarkt/Urberach (DE); Vogel, Peter, 61194 Niddatal (DE); Braun, Heinz, 41593 Dormagen (DE); Stadler, Stephan, 63150 Heusenstamm (DE)
(74) Vertreter: Bohnenberger, Johannes, Dr.

(57) **Zusammenfassung**

Um Leitungsblockaden in einer Vermittlungseinrichtung für ein Telekommunikationssystem, beispielsweise ein aus mehreren miteinander vernetzten Telekommunikationsanlagen gebildetes Telekommunikationssystem, automatisch beheben zu können, wird vorgeschlagen, in der Vermittlungseinrichtung ein Belegungsverzeichnis einzurichten, in welchem jede Belegung einer Leitung aus mindestens einem von der Vermittlungseinrichtung verwalteten Leitungsbündel vermerkt wird. Dieses Belegungsverzeichnis wird gemäß einer bevorzugten Ausführungsform als Liste organisiert, die die belegten Leitungen in der Reihenfolge ihrer Belegung enthält. Jede neue Belegung wird dabei durch einen Eintrag am jeweiligen Listenende registriert. Weil es sein kann, daß das Freiwerden einzelner Leitungen beispielsweise aufgrund von Softwarefehlern nicht ordnungsgemäß an die Vermittlungseinrichtung gemeldet wird, veranlaßt diese bei der bevorzugten Ausführungsform abhängig von einer vorbestimmten Prüfbedingung, daß die jeweils am Listenanfang stehende Leitung auf ihren tatsächlichen Belegungszustand überprüft wird. Ist die betreffende Leitung tatsächlich weiterhin belegt, bleibt sie in der Liste und wird ans Listenende umgesetzt; ansonsten wird sie aus der Liste gelöscht.

## Beschreibung

Die Erfindung befaßt sich mit der Belegungsverwaltung eines Leitungsbündels in einer Vermittlungseinrichtung eines Telekommunikationssystems.

In leitungsvermittelten Telekommunikationssystemen werden Leitungen häufig in Bündeln zusammengefaßt und verwaltet. Bei einer gehenden Leitungsbelegung wird eine freie Leitung entsprechend einer gewählten Ausscheidungskennziffer aus einem bestimmten Bündel geholt. In der Verwaltung wird dies als belegt gekennzeichnet. Bei einer kommenden Belegung meldet sich die betreffende Leitung bei der Verwaltung als belegt. Wird die Leitung wieder frei, so meldet sie dies der Verwaltung, woraufhin sie wieder als frei gekennzeichnet wird.

In mehrgruppig aufgebauten Telekommunikationssystemen mit verteilter Steuerung, wie sie beispielsweise durch mehrere quervernetzte Telekommunikationsanlagen mit jeweils eigenem Steuerwerk gebildet sein können, ist es üblich, eine zentrale Bündelverwaltung einzurichten, deren Aufgaben von einem der dezentralen Steuerwerke übernommen werden. Dabei kann es durch Fehler in der Vermittlungs-Software oder durch Meldungsverluste zwischen den Steuerwerken vorkommen, daß entkettete, d.h. als belegt registrierte Leitungen nicht mehr verkettet werden, sie also weiterhin in der Verwaltung als belegt gelten und deshalb nicht für neue Belegungen zur Verfügung gestellt werden, selbst wenn die betreffende Leitung tatsächlich nicht mehr belegt ist. Dies kann zu einer dauerhaften Blockade einzelner Leitungen aus dem Bündel und damit zu einer ungewollten Herabsetzung der Vermittlungskapazität führen.

Aufgabe der Erfindung ist es demnach, einen Weg aufzuzeigen, wie auf dauerhafte Leitungsblockaden zurückzuführende Verminderungen der Vermittlungskapazität vermieden werden können.

Zur Lösung dieser Aufgabe ist nach einem ersten Aspekt der Erfindung ein Verfahren zum Betrieb einer Vermittlungseinrichtung eines Telekommunikationssystems vorgesehen, bei dem eine Belegungsverwaltung eines eine Mehrzahl Leitungen umfassenden Leitungsbündels durchgeführt wird. Im Rahmen dieses Verfahrens wird ein Belegungsverzeichnis eingerichtet, in das jede belegte Leitung aus dem Bündel eingetragen wird. Zumindest bei voller Belegung des Leitungsbündels wird mindestens eine der in dem Belegungsverzeichnis als belegt eingetragenen Leitungen zur Überprüfung auf ihren tatsächlichen Belegungszustand ausgewählt. Wird dabei die jeweils überprüfte Leitung als tatsächlich unbelegt erfaßt, so wird ihr Eintrag aus dem Belegungsverzeichnis gelöscht.

Die erfindungsgemäße Lösung ermöglicht es, blockierte Leitungen aufzufinden und sie wieder für nachfolgende Belegungen freizugeben. Die Überprüfung des tatsächlichen Belegungszustands einer Leitung erfolgt zweckmäßigerweise zumindest dann, wenn alle Leitungen des Bündels als belegt in dem Belegungsverzeichnis vermerkt sind, damit möglichst rasch nachfolgende Belegungsanforderungen wieder bedient werden können.

Es ist gleichwohl nicht ausgeschlossen, auch schon bei Teilauslastung des Bündels solche Überprüfungen vorzunehmen. Dies kann beispielsweise in der Form geschehen, daß grundsätzlich jede Leitung ab einer gewissen Belegungsdauer überprüft wird. Auch können erst ab einem bestimmten Auslastungsgrad des Bündels einzelne oder alle Leitungen überprüft werden.

Gemäß einer bevorzugten Weiterbildung der Erfindung wird das Belegungsverzeichnis als Liste organisiert, welche die Einträge der belegten Leitungen in der zeitlichen Reihenfolge ihrer Belegung enthält. Für jede neu belegte Leitung wird dabei ein Eintrag an das Ende dieser Liste angehängt. Bevorzugt wird die jeweils am Listenanfang stehende Leitung zur Überprüfung auf ihren tatsächlichen Belegungszustand ausgewählt. Falls der tatsächliche Belegungszustand der jeweils überprüften Leitung als weiterhin belegt festgestellt wird, wird ihr Eintrag vorzugsweise vom Listenanfang an das Ende der Liste umgesetzt. Auf diese Weise wird erreicht, daß stets diejenige Leitung überprüft wird, die von allen im Belegungsverzeichnis eingetragenen Leitungen die älteste ist bzw. deren letzte Überprüfung am längsten zurückliegt. Dies ist zweckmäßig, weil ein Überprüfungsbedarf besonders bei solchen Leitungen besteht, die in der Verwaltungszentrale schon lange als belegt gelten.

Zumindest der jeweils am Listenanfang stehenden Leitung kann ein Anforderungs-Zählwert zugeordnet werden, welcher ausgehend von einem Anfangswert bei jeder neuen Belegungsanforderung bezüglich des Leitungsbündels (also bei jeder Anforderung, eine Leitung aus dem Bündel zur Herstellung einer Nachrichtenverbindung zur Verfügung zu stellen) inkrementiert wird. Dabei wird dieser Anforderungs-Zählwert vorteilhafterweise unabhängig davon inkrementiert, ob die Belegungsanforderung bedient werden kann (d.h. noch freie Leitungen im Bündel vorhanden sind) oder nicht (d.h. alle Leitungen als belegt registriert sind). Als Bedingung zur Überprüfung kann dann festgelegt werden, daß der Anforderungs-Zählwert einen vorbestimmten Schwellwert erreicht. Insbesondere kann jeder Leitung in der Liste ein Anforderungs-Zählwert zugeordnet werden. Hierdurch können die Intervalle zwischen aufeinanderfolgenden Überprüfungen verkürzt werden.

Im Fall einer Umsetzung des Eintrags der jeweils überprüften Leitung vom Listenanfang an das Ende der Liste - gleichbedeutend mit der Feststellung, daß die überprüfte Leitung tatsächlich noch belegt ist - wird der Anforderungs-Zählwert dieser Leitung vorzugsweise auf den Anfangswert zurückgesetzt, so daß die betreffende Leitung erst nach einer bestimmten Anzahl von Belegungsanforderungen (festgelegt durch den Schwellwert des Anforderungs-Zählwerts) wieder zur Überprüfung bereitsteht.

Schutz soll im Rahmen der Erfindung auch für eine Software bestehen, die die Durchführung des vorstehend beschriebenen Verfahrens bewirkt.

Nach einem weiteren Aspekt der Erfindung ist ferner eine Vermittlungseinrichtung für ein Telekommunikationssystem vorgesehen, welche zur Belegungsverwaltung eines eine Mehrzahl Leitungen umfassenden Leitungsbündels ausgebildet ist. Diese Vermittlungseinrichtung umfaßt einen Belegungsspeicher zur Speicherung eines Eintrags für jede belegte Leitung aus dem Bündel sowie eine mit dem Belegungsspeicher verbundene elektronische Belegungsverwaltungseinheit. Letztere ist dazu eingerichtet, zumindest bei voller Belegung des Leitungsbündels mindestens eine der in dem Belegungsspeicher als belegt eingetragenen Leitungen zur Überprüfung auf ihren tatsächlichen Belegungszustand auszuwählen und die Löschung des Eintrags der jeweils überprüften Leitung in dem Belegungsspeicher zu veranlassen, falls diese als tatsächlich unbelegt erfaßt wird.

Die Belegungsverwaltungseinheit kann dazu eingerichtet sein, die Speicherung der Einträge der belegten Leitungen in dem Belegungsspeicher in Form einer Belegungsliste zu organisieren, welche die Einträge der belegten Leitungen in der zeitlichen Reihenfolge ihrer Belegung enthält. Für jede neu belegte Leitung kann die Belegungsverwaltungseinheit dann die Speicherung eines Eintrags am Ende dieser Liste veranlassen. Zur Überprüfung auf den tatsächlichen Belegungszustand wählt die Belegungsverwaltungseinheit vorzugsweise die jeweils am Listenanfang stehende Leitung aus.

Die Belegungsverwaltungseinheit kann dazu eingerichtet sein, in dem Belegungsspeicher eine Umsetzung des Eintrags der jeweils überprüften Leitung vom Listenanfang an das Ende der Liste zu bewirken, falls die betreffende Leitung als tatsächlich belegt erfaßt wird.

In dem Belegungsspeicher kann zumindest in Zuordnung zu der jeweils am Listenanfang stehenden Leitung ein Anforderungs-Zählwert gespeichert werden. Die Belegungsverwaltungseinheit kann dann dazu eingerichtet sein, ausgehend von einem Anfangswert eine Inkrementierung dieses Anforderungs-Zählwerts bei jeder neuen Belegungsanforderung bezüglich des Leitungsbündels zu bewirken. Die Überprüfung der jeweils am Listenanfang stehenden Leitung wird von der Belegungsverwaltungseinheit vorzugsweise dann veranlaßt, wenn der Anforderungs-Zählwert einen vorbestimmten Schwellwert erreicht. Insbesondere kann in Zuordnung zu jeder Leitung in der Liste ein Anforderungs-Zählwert in dem Belegungsspeicher gespeichert werden.

Im Fall einer Umsetzung des Eintrags der jeweils überprüften Leitung vom Listenanfang an das Ende der Liste kann die Belegungsverwaltungseinheit ferner dazu eingerichtet sein, eine Zurücksetzung des Anforderungs-Zählwerts dieser Leitung auf den Anfangswert zu bewirken.

Ausführungsbeispiele der Erfindung werden nachfolgend anhand der beigefügten Zeichnungen näher erläutert. Es stellen dar:
- Fig. 1: ein Beispiel der Führung einer Belegungsliste zur Erläuterung des erfindungsgemäßen Verfahrens und
- Fig. 2: schematisch ein Beispiel der Einbindung der erfindungsgemäßen Vermittlungseinrichtung in ein Telekommunikationssystem.

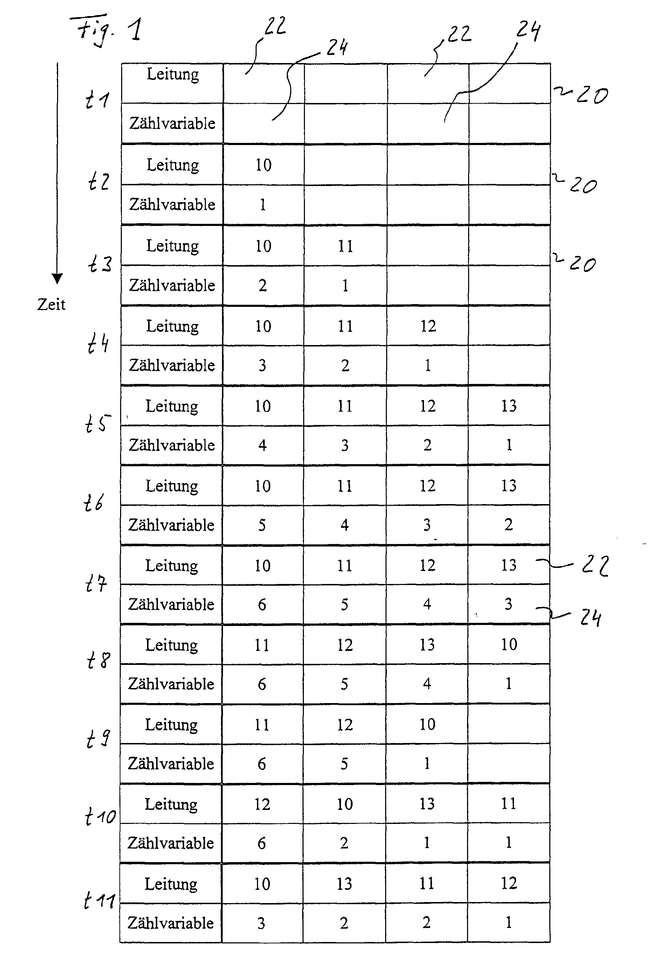

Die Einträge der in Fig. 1 gezeigten Belegungsliste geben Auskunft darüber, welche Leitungen eines von einer Vermittlungseinrichtung verwalteten Leitungsbündels belegt sind. Bevor die Listeneinträge in Fig. 1 im einzelnen erläutert werden, werden zunächst einige Grundsätze der Listenführung, die für das vorliegende Beispiel zutreffen, allgemein dargestellt.

In einer Verwaltungszentrale der Vermittlungseinrichtung werden für jedes verwaltete Leitungsbündel zwei doppelseitig verkettete Listen geführt, nämlich eine für die freien, unbelegten Leitungen des jeweiligen Bündels und eine für die belegten Leitungen. In der Liste für die belegten Leitungen wird außerdem für jede eingetragene Leitung eine Zählvariable geführt.

Wird bei der Vermittlungseinrichtung eine Leitung aus einem Bündel angefordert, so versucht diese, eine freie Leitung zu finden. Die gefundene Leitung wird dann ausgekettet, d. h. sie wird in der Verwaltungszentrale in die Belegungsliste für das betreffende Bündel eingetragen und in der zugehörigen Freiliste gelöscht. Die Zählvariable für die ausgekettete Leitung wird auf einen Anfangswert gesetzt, beispielsweise auf 1.

Wird später eine weitere Leitung aus diesem Bündel ausgekettet, so wird auch sie von der Freiliste des betreffenden Bündels in die Belegungsliste umgekettet. Dabei wird sie an das Ende der Belegungsliste gesetzt, also an die Reihe der bereits in der Belegungsliste eingetragenen Leitungen angehängt. Die Zählvariable für die soeben ausgekettete Leitung wird auf den Anfangswert gesetzt; die Zählvariable jeder übrigen in der Belegungsliste stehenden Leitung wird jeweils um ein vorbestimmtes Inkrement, beispielsweise um 1, erhöht.

Dieser Vorgang wird jedesmal wiederholt, wenn auf eine Belegungsanforderung hin eine freie Leitung in dem betreffenden Bündel gefunden wird. Ist keine freie Leitung mehr im Bündel enthalten, so wird zwar die Belegungsanforderung abgewiesen, die Inkrementierung der Zählvariablen wird dennoch vorgenommen. Insofern kann die Zählvariable als ein Anforderungs-Zählwert aufgefaßt werden.

Wenn bei der ersten in der Belegungsliste stehenden Leitung ein vorbestimmter Maximal- oder Schwellwert der zugehörigen Zählvariable erreicht wird, so veranlaßt die Verwaltungszentrale, daß diese Leitung auf ihren tatsächlichen Belegungszustand überprüft wird. In einem Verbund von Telekommunikationsanlagen beispielsweise kann dies mit der Absendung einer Meldung an eine dezentrale Einheit des Verbunds verbunden sein, wenn die betreffende Leitung ursprünglich von einer solchen dezentralen Einheit angefordert wurde. Stellt sich dabei heraus, daß die betreffende Leitung tatsächlich noch belegt ist, so wird sie in der Belegungsliste von der ersten Stelle an die letzte Stelle umgesetzt und ihre Zählvariable wieder auf den Anfangswert zurückgesetzt. Die Zählvariablen der übrigen Leitungen werden inkrementiert. Wird bei der Zustandsüberprüfung der Leitung dagegen festgestellt, daß die Leitung tatsächlich nicht mehr in Belegung ist, sondern frei ist, so wird sie in der Verwaltungszentrale von der Belegungsliste wieder in die Freiliste umgekettet und steht somit wieder für eine neue Nachrichtenverbindung zur Verfügung.

Überprüft und gegebenenfalls ans Listenende umgesetzt wird im Beispiel immer nur die erste Leitung in der Belegungsliste, bei der der Maximalwert ereicht wird. Falls gleichzeitig auch andere Leitungen in der Belegungsliste den Maximalwert aufweisen, so werden sie bei der Inkrementierung der Zählvariablen nicht berücksichtigt.

Der Maximalwert der Zählvariable, ab dem eine Überprüfung stattfindet, wird vorzugsweise so festgelegt, daß die Anzahl der erforderlichen Inkrementierungsschritte vom Anfangswert der Zählvariable bis zu deren Maximalwert mindestens gleich der Anzahl der im Bündel enthaltenen Leitungen ist. Dabei kann die Anzahl der erforderlichen Inkrementierungsschritte sogar größer als die Anzahl der Leitungen im Bündel sein, die letztere beispielsweise um drei übersteigen.

Das in der Figur dargestellte Beispiel geht von der Annahme aus, daß maximal vier Leitungen im Bündel verfügbar sind. Diese Leitungen sind mit den Nummern 10, 11, 12 und 13 bezeichnet. Als Maximalwert der Zählvariablen der Leitungen wird 6 angenommen. Die Belegungsliste trägt allgemein das Bezugszeichen 20. Sie setzt sich aus ersten Listenfeldern 22 und zweiten Listenfeldern 24 zusammen. In die ersten Listenfelder 22 werden die Nummern der besetzten Leitungen eingetragen, in die zweiten Listenfelder die Werte der den eingetragenen Leitungen zugeordneten Zählvariablen. Die Belegungsliste 20 ist in der Figur untereinander zu verschiedenen Zeitpunkten t1 bis t11 dargestellt.

Zu Beginn (Zeitpunkt t1) ist die Belegungsliste 20 leer. Sodann wird die Leitung Nr. 10 belegt und am Anfang der Belegungsliste 20 eingetragen (Zeitpunkt t2). Ihre Zählvariable wird auf den Anfangswert 1 gesetzt. Anschließend werden nacheinander die Leitungen 11 bis 13 belegt und jeweils an das Ende der vorherigen Listeneinträge angehängt (Zeitpunkte t3 bis t5). Die Zählvariablen der bereits eingetragenen Leitungen werden jeweils um 1 inkrementiert.

Zu den Zeitpunkten t6 und t7 gehen weitere Belegungsanforderungen ein. Diese können jedoch nicht bedient werden, weil bereits alle Leitungen 10 bis 13 des Bündels belegt sind. Es erfolgt jeweils eine Inkrementierung der Zählvariablen aller Leitungen.

Zum Zeitpunkt t7 hat die Leitung 10 den Maximalwert 6 erreicht. Deshalb wird sie nun überprüft. Die Überprüfung ergibt, daß die Leitung 10 tatsächlich immer noch belegt ist. Sie wird an das Ende der Belegungsliste 20 umgesetzt und ihre Zählvariable auf den Wert 1 zurückgesetzt. Die Zählvariablen der übrigen Leitungen 11 bis 13 werden inkrementiert. Die Belegungsliste 20 hat nun das Aussehen zum Zeitpunkt t8.

Anschließend wird die Leitung 13 bei der Verwaltungszentrale als wieder frei gemeldet. Ihr Eintrag wird deshalb aus der Belegungsliste 20 entfernt (Zeitpunkt t9).

Als nächstes wird auf eine neuerliche Belegungsanforderung hin Leitung 13 wieder in die Belegungsliste 20 eingetragen. Die Zählvariablen der Leitungen 10 und 12 werden inkrementiert. Außerdem wird Leitung 11, weil ihre Zählvariable schon den Maximalwert 6 erreicht hat, überprüft und - da sie immer noch belegt ist - an das Ende der Belegungsliste 20 unter gleichzeitiger Rücksetzung ihrer Zählvariable umgesetzt. Die Belegungsliste 20 hat nun das Aussehen zum Zeitpunkt t10.

Auf die nächste Belegungsanforderung hin wird eine Überprüfung der nun am Listenanfang stehenden Leitung 12 veranlaßt, deren Zählvariable mittlerweile den Maximalwert 6 erreicht hat. Da die Überprüfung ergibt, daß Leitung 12 immer noch belegt ist, wird sie unter gleichzeitiger Rücksetzung ihrer Zählvariable ans Listenende umgesetzt. Die Zählvariablen der übrigen Leitungen 10, 11 und 13 werden inkrementiert.

Abweichend von der im vorstehenden Beispiel gewählten Methode, stets die Zählvariablen aller in der Belegungsliste 20 eingetragenen Leitungen zu inkrementieren, ist es denkbar, nur die Zählvariable der jeweils am Listenanfang stehenden Leitung zu inkrementieren. Dabei wird der gleiche Effekt wie oben erzielt, jedoch mit zeitlicher Verzögerung.

Im obigen Beispiel wurde die Überprüfung der Leitungen abhängig davon gemacht, daß seit Eintragung der jeweiligen Leitung in die Belegungsliste 20 ein bestimmte Anzahl von Belegungsanforderungen bei der Vermittlungseinrichtung eingetroffen ist. Als eine alternative oder zusätzliche Prüfvoraussetzung könnte verlangt werden, daß die betreffende Leitung seit einer bestimmten Mindestzeitdauer belegt ist. In diesem Fall müßte ein Zeitzähler eingerichtet werden, der die Belegungsdauer der jeweiligen Leitung mißt.

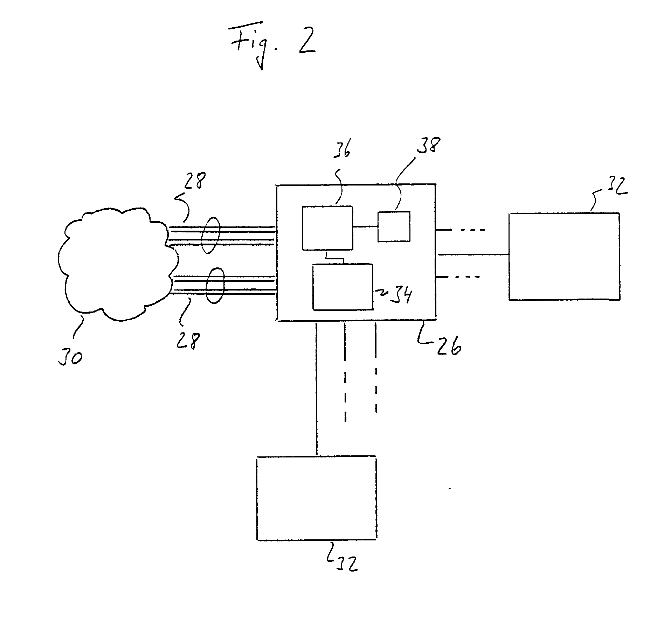

Das vorstehend erläuterte Beispiel der listenbasierten Belegungsverwaltung kann grundsätzlich in jeder beliebigen Vermittlungseinrichtung implementiert werden, bei der die Möglichkeit von Leitungsblockaden nicht ausgeschlossen werden kann. Eine beispielhafte Anwendung ist in Fig. 2 gezeigt. Eine Vermittlungseinrichtung, in der das erfindungsgemäße Verfahren implementiert ist, ist dort mit 26 bezeichnet. Sie ist über mehrere Leitungsbündel 28 an ein Telekommunikationsnetz 30 angeschlossen, das beispielsweise ein öffentliches Netz sein kann. Die Vermittlungseinrichtung 26 ist außerdem mit mehreren Telekommunikationsgeräten 32 verbunden. Sie bedient Vermittlungswünsche zwischen dem Telekommunikationsnetz 30 und den Telekommunikationsgeräten 32, aber auch Vermittlungswünsche zwischen den Telekommunikationsgeräten 32 untereinander. Die Vermittlungseinrichtung 26 kann Teil einer Telekommunikationsanlage sein. Auch zumindest ein Teil der Telekommunikationsgeräte 32 kann jeweils als Telekommunikationsanlage ausgeführt sein, so daß ein Verbund von miteinander vernetzten, dezentral gesteuerten Telekommunikationsanlagen gebildet werden kann. Bei den Telekommunikationsgeräten 32 kann es sich wenigstens zum Teil aber auch um Endgeräte handeln.

Die Vermittlungseinrichtung 26 umfaßt eine die Leitungen nach Maßgabe der kommenden und gehenden Belegungsanforderungen schaltende Koppelstufe 34 sowie ein elektronisches Steuerwerk 36, welches die Koppelstufe 34 steuert und zugleich die Aufgabe der Belegungsverwaltung für die Leitungsbündel 28 übernimmt. Hierzu umfaßt die Vermittlungseinrichtung 26 einen mit dem Steuerwerk 36 verbundenen Listenspeicher 38, in welchem für jedes Leitungsbündel 28 eine Freiliste und eine Belegungsliste gespeichert werden. Die Verwaltung der Listen erfolgt programmgesteuert durch das Steuerwerk 36. Entsprechend dem obigen Beispiel paßt das Steuerwerk 36 demnach bei Neubelegungen von Leitungen und bei Freiwerden von Leitungen die Listeneinträge an, inkrementiert und überwacht die den Listeneinträgen zugeordneten Zählvariablen und bewirkt bei Bedarf die Überprüfung einzelner Leitungen. Im Rahmen dieser Überprüfung kann das Steuerwerk 36 beispielsweise eine Meldung an eines der Telekommunikationsgeräte 32 absenden, mit der Aufforderung an dieses zu prüfen, ob auf dem durchgeschalteten Kanal tatsächlich weiterhin eine Kommunikation stattfindet oder ob diese bereits beendet ist. Abhängig von der Antwortmeldung des jeweiligen Telekommunikationsgeräts 32 bewirkt das Steuerwerk 36 dann entweder die Löschung des betreffenden Listeneintrags im Listenspeicher 38 oder - zumindest gemäß obigem Beispiel - die Umsetzung des Listeneintrags und die Zurücksetzung der zugehörigen Zählvariable.

### Bezugszeichenliste

- 10, 11, 12, 13: Leitung
- 20: Belegungsliste
- 22, 24: Listenfeld
- 26: Vermittlungseinrichtung
- 28: Leitungsbündel
- 30: Telekommunikationsnetz
- 32: Telekommunikationsgerät
- 34: Koppelstufe
- 36: elektronisches Steuerwerk
- 38: Listenspeicher
- t₁ bis t₁₁: Zeitpunkt

## Patentansprüche

1. Verfahren zum Betrieb einer Vermittlungseinrichtung (26) eines Telekommunikationssystems, bei dem eine Belegungsverwaltung eines eine Mehrzahl Leitungen (10 - 13) umfassenden Leitungsbündels (28) durchgeführt wird,
**dadurch gekennzeichnet, daß**
ein Belegungsverzeichnis (20) eingerichtet wird, in das jede belegte Leitung (10 - 13) aus dem Bündel (28) eingetragen wird, daß zumindest bei voller Belegung des Leitungsbündels (28) mindestens eine der in dem Belegungsverzeichnis (20) als belegt eingetragenen Leitungen (10 - 13) zur Überprüfung auf ihren tatsächlichen Belegungszustand ausgewählt wird und daß der Eintrag der jeweils überprüften Leitung aus dem Belegungsverzeichnis (20) gelöscht wird, falls diese als tatsächlich unbelegt erfaßt wird.

2. Verfahren nach Anspruch 1,
**dadurch gekennzeichnet, daß**
das Belegungsverzeichnis (20) als Liste organisiert wird, welche die Einträge der belegten Leitungen (10 - 13) in der zeitlichen Reihenfolge ihrer Belegung enthält, wobei für jede neu belegte Leitung ein Eintrag an das Ende dieser Liste (20) angehängt wird und die jeweils am Listenanfang stehende Leitung zur Überprüfung auf ihren tatsächlichen Belegungszustand ausgewählt wird.

3. Verfahren nach Anspruch 2,
**dadurch gekennzeichnet, daß**
der Eintrag der jeweils überprüften Leitung vom Listenanfang an das Ende der Liste (20) umgesetzt wird, falls die betreffende Leitung als tatsächlich belegt erfaßt wird.

4. Verfahren nach Anspruch 2 oder 3,
**dadurch gekennzeichnet, daß**
zumindest der jeweils am Listenanfang stehenden Leitung (10 - 13) ein Anforderungs-Zählwert zugeordnet wird, welcher ausgehend von einem Anfangswert bei jeder neuen Belegungsanforderung bezüglich des Leitungsbündels (28) inkrementiert wird, und daß die Überprüfung dieser Leitung auf ihren tatsächlichen Belegungszustand bewirkt wird, wenn ihr Anforderungs-Zählwert einen vorbestimmten Schwellwert erreicht.

5. Verfahren nach Anspruch 4,
**dadurch gekennzeichnet, daß**
jeder Leitung (10 - 13) in der Liste (20) ein Anforderungs-Zählwert zugeordnet wird.

6. Verfahren nach Anspruch 4 oder 5 in Verbindung mit Anspruch 3,
**dadurch gekennzeichnet, daß**
im Fall einer Umsetzung des Eintrags der jeweils überprüften Leitung (10 - 13) vom Listenanfang an das Ende der Liste (20) der Anforderungs-Zählwert dieser Leitung (10 - 13) auf den Anfangswert zurückgesetzt wird.

7. Software zur Durchführung des Verfahrens nach einem der Ansprüche 1 bis 6.

8. Vermittlungseinrichtung für ein Telekommunikationssystem, welche zur Belegungsverwaltung eines eine Mehrzahl Leitungen (10 - 13) umfassenden Leitungsbündels (28) ausgebildet ist,
**gekennzeichnet durch**
einen Belegungsspeicher (38) zur Speicherung eines Eintrags für jede belegte Leitung (10 - 13) aus dem Bündel (28) und **durch** eine mit dem Belegungsspeicher (38) verbundene elektronische Belegungsverwaltungseinheit (36), welche dazu eingerichtet ist, zumindest bei voller Belegung des Leitungsbündels (28) mindestens eine der in dem Belegungsspeicher (38) als belegt eingetragenen Leitungen (10 - 13) zur Überprüfung auf ihren tatsächlichen Belegungszustand auszuwählen und die Löschung des Eintrags der jeweils überprüften Leitung in dem Belegungsspeicher (38) zu veranlassen, falls diese als tatsächlich unbelegt erfaßt wird.

9. Vermittlungseinrichtung nach Anspruch 8,
**dadurch gekennzeichnet, daß**
die Belegungsverwaltungseinheit (36) dazu eingerichtet ist, die Speicherung der Einträge der belegten Leitungen (10 - 13) in dem Belegungsspeicher (38) in Form einer Belegungsliste (20) zu organisieren, welche die Einträge der belegten Leitungen (10 - 13) in der zeitlichen Reihenfolge ihrer Belegung enthält, und daß die Belegungsverwaltungseinheit (36) ferner dazu eingerichtet ist, für jede neu belegte Leitung die Speicherung eines Eintrags am Ende dieser Liste (20) zu veranlassen und die jeweils am Listenanfang stehende Leitung zur Überprüfung auf ihren tatsächlichen Belegungszustand auszuwählen.

10. Vermittlungseinrichtung nach Anspruch 9,
**dadurch gekennzeichnet, daß**
die Belegungsverwaltungseinheit (36) dazu eingerichtet ist, in dem Belegungsspeicher (38) eine Umsetzung des Eintrags der jeweils überprüften Leitung vom Listenanfang an das Ende der Liste (20) zu bewirken, falls die betreffende Leitung als tatsächlich belegt erfaßt wird.

11. Vermittlungseinrichtung nach Anspruch 9 oder 10,
**dadurch gekennzeichnet, daß**
in dem Belegungsspeicher (38) zumindest in Zuordnung zu der jeweils am Listenanfang stehenden Leitung (10 - 13) ein Anforderungs-Zählwert gespeichert wird und die Belegungsverwaltungseinheit (36) dazu eingerichtet ist, ausgehend von einem Anfangswert eine Inkrementierung dieses Anforderungs-Zählwerts bei jeder neuen Belegungsanforderung bezüglich des Leitungsbündels (28) zu bewirken und die Überprüfung der jeweils am Listenanfang stehenden Leitung auf ihren tatsächlichen Belegungszustand zu veranlassen, wenn deren Anforderungs-Zählwert einen vorbestimmten Schwellwert erreicht.

12. Vermittlungseinrichtung nach Anspruch 11,
**dadurch gekennzeichnet, daß**
in dem Belegungsspeicher (38) in Zuordnung zu jeder Leitung (10 - 13) in der Liste (20) ein Anforderungs-Zählwert gespeichert wird.

13. Vermittlungseinrichtung nach Anspruch 11 oder 12 in Verbindung mit Anspruch 10,
**dadurch gekennzeichnet, daß**
die Belegungsverwaltungseinheit (36) dazu eingerichtet ist, im Fall einer Umsetzung des Eintrags der jeweils überprüften Leitung (10 - 13) vom Listenanfang an das Ende der Liste (20) eine Zurücksetzung des Anforderungs-Zählwerts dieser Leitung (10 - 13) auf den Anfangswert zu bewirken.
